# FASCICULE DE BREVET EUROPEEN

(11) **EP 2 318 666 B1**
(45) Date de publication et mention de la délivrance du brevet: **31.07.2013**
(21) Numéro de dépôt: 09809331.3
(22) Date de dépôt: 25.08.2009
(51) Int. Cl.: F01D 9/04, F01D 5/08, F02C 7/28

(54) **AUBAGE FIXE DE TURBOMACHINE A MASSE REDUITE ET TURBOMACHINE COMPORTANT AU MOINS UN TEL AUBAGE FIXE**
FESTE SCHAUFELANORDNUNG FÜR EINEN TURBINENMOTOR MIT REDUZIERTEM GEWICHT SOWIE TURBINENMOTOR MIT MINDESTENS EINER SOLCHEN FESTEN SCHAUFELANORDNUNG
FIXED VANE ASSEMBLY FOR A TURBINE ENGINE HAVING REDUCED WEIGHT, AND TURBINE ENGINE INCLUDING AT LEAST ONE SUCH FIXED VANE ASSEMBLY

(30) Priorité: 26.08.2008 FR 0855732
(43) Date de publication de la demande: 11.05.2011
(73) Titulaire: Snecma, 75015 Paris (FR)
(72) Inventeur: BLANCHARD, Stéphane, Pierre, Guillaume, F-77590 Chartrettes (FR); DAKOWSKI, Mathieu, F-94880 Noiseau (FR); GARIN, Fabrice, Marcel, Noël, F-77350 Boissise La Bertrand (FR); JUDET, Maurice, Guy, F-77190 Dammarie Les Lys (FR)
(74) Mandataire: Ilgart, Jean-Christophe
(86) Numéro de dépôt international: PCT/EP2009/060929
(87) Numéro de publication internationale: WO 2010/023204

(56) Documents cités:
- EP-A- 0 363 280
- EP-A- 1 657 406
- FR-A- 2 907 499
- US-A1- 2001 011 452
- US-A1- 2007 110 565
- US-B1- 6 447 250

## Description

### DOMAINE TECHNIQUE ET ART ANTÉRIEUR

La présente invention se rapporte à un aubage fixe de turbomachine, ledit aubage comportant un anneau d'abradable, et à une turbomachine comportant au moins un tel aubage.

Un turboréacteur d'avion comporte classiquement un compresseur haute pression, un compresseur basse pression, une chambre de combustion, une turbine haute pression et une turbine basse pression.

Le compresseur est destiné à augmenter la pression de l'air atmosphérique, la chambre de combustion mélange l'air qui est comprimé par le compresseur avec du carburant et brûle ce mélange, la turbine, placée dans le flux éjecté, est alors entraînée par ce flux de gaz à haute température. La turbine sert notamment à entraîner les compresseurs.

Les compresseurs comportent des aubes mobiles et des redresseurs fixes pour redresser le flux entre les étages de compression.

En sortie de la chambre de combustion, un distributeur haute pression fixe est prévu, destiné à redresser le flux de gaz chaud sortant de la chambre de combustion avant qu'il n'entre en contact avec la turbine haute pression. Ce distributeur haute pression comporte un anneau fixé sur un carter, dit carter sous chambre, et des pales s'étendant radialement vers l'extérieur. Le carter sous chambre assure la liaison entre le compresseur et la turbine.

Le distributeur est composé de plusieurs secteurs, fixés chacun sur le carter sous chambre.

Chaque secteur comporte, de manière classique, une plateforme de laquelle s'étendent radialement vers l'extérieur des pales et radialement vers l'intérieur une patte de fixation au carter. La patte comporte deux alésages destinés à être alignés avec deux alésages du carter sous chambre prévus du côté de la turbine haute pression, des pions sont insérés dans ces alésages alignés, un flasque est rajouté en aval des pions pour les retenir axialement.

Ce type de turboréacteur est par exemple connu du document FR 2 907 499.

Ce type de fixation donne satisfaction. Cependant, dans le domaine aéronautique, il est en permanence rechercher une réduction de la masse des différents composants.

Par ailleurs, le rendement des moteurs aéronautiques dépend en grande partie du contrôle des flux gazeux entre les parties fixes, comme le distributeur et les parties mobiles, comme la turbine haute pression. Afin d'avoir un jeu minimal, un disque en matériau abradable est fixé sur le stator. Cet anneau est conçu pour assurer l'étanchéité avec la turbine et pour se dégrader et protéger les pales de la turbine en cas de contact accidentel avec le stator. Les matériaux abradables ont par exemple une structure en nid d'abeille.

Dans le document FR 2 907 499, le matériau abradable est porté par un anneau support d'abradable fixé sur le carter au moyen de vis.

C'est par conséquent un but de la présente invention de proposer un aubage fixe de turbomachine permettant de réduire la longueur totale de la turbomachine.

C'est également un but de la présente invention de proposer un aubage fixe de turbomachine dont la masse est réduite.

Un aubage fixe de l'art antérieur est également divulgué dans le doument EP 1657406.

### EXPOSÉ DE L'INVENTION

Le but précédemment énoncé est atteint par un aubage fixe de turbomachine conformément a la revendication 1 comportant des aubes fixes, un carter sur lequel sont fixées les aubes fixes, un anneau en matériau abradable fixé sur le carter du coté des aubes mobiles, dans lequel les aubes fixes sont fixées sur le carter par l'intermédiaire de la liaison de fixation de l'anneau d'abradable sur le carter. Le nombre de pièces requis pour réaliser cet aubage fixe est réduit, sa masse s'en trouve diminuée, ainsi que celle de la turbomachine le comportant.

En outre, la fabrication est simplifiée puisque le nombre de pièces à assembler est réduit. Le coût de revient s'en trouve de ce fait également diminué.

En d'autres termes, on utilise une liaison unique pour assembler l'anneau d'abradable et les aubes fixes sur le carter. Dans le cas d'un distributeur haute pression, on utilise la même liaison mécanique pour fixer l'anneau d'abradable et les aubes du distributeur sur le carter sous chambre.

La présente invention a alors principalement pour objet un aubage fixe de turbomachine d'axe longitudinal comportant un carter et au moins deux secteurs angulaires munis de pales, lesdits secteurs angulaires étant fixés sur le carter, chaque secteur angulaire comportant une plateforme de laquelle au moins une pale est en saillie radialement vers l'extérieur et une patte de fixation du secteur angulaire sur le carter, ladite patte de fixation étant en saillie de la plateforme radialement vers l'intérieur, l'aubage fixe comportant un anneau d'abradable porté par un support fixé sur le carter du côté d'un aubage mobile au moyen d'une pluralité d'ensembles vis-écrous, l'aubage fixe comportant également des pions de retenue radiale des secteurs angulaires introduits dans des premiers alésages pratiqués dans les pattes de fixation et dans une bride de montage ; lesdits alésages ayant des axes sensiblement parallèles à l'axe longitudinal, la bride de montage étant fixée sur le carter par les mêmes ensembles vis-écrous que ceux fixant le support d'anneau d'abradable sur le carter, la pluralité d'ensemble vis-écrous traversant le support de l'anneau d'abradable, et la bride de montage étant située à l'oppoé de l'anneau d'abradable par rapport au carter et définissant avec le carter une gorge dans laquelle sont disposées les pattes de fixation.

Dans un exemple de réalisation, chaque pion comporte une collerette s'étendant orthogonalement à l'axe du pion radialement vers l'extérieur, ladite collerette délimitant axialement une tête et une queue, la tête étant reçue dans un premier alésage de la bride de montage et la collerette venant en appui plan par une de ses faces contre la bride, de sorte à orienter l'axe du pion orthogonalement à la bride de montage.

Dans un autre exemple de réalisation, chaque pion comporte une partie de plus petite section et une deuxième partie de plus grande section raccordées par un épaulement, les premiers alésages comportant chacun une portée annulaire contre lequel vient en appui ledit épaulement de sorte à empêcher les pions de retenue radiale de se déplacer axialement en éloignement du carter.

Dans un autre exemple de réalisation, chaque pion de retenue radiale comporte une première partie de plus petite section et une deuxième partie de plus grande section raccordées par un épaulement, ledit épaulement venant en appui contre la périphérie d'un premier alésage de la bride de montage de sorte à empêcher les pions de se déplacer axialement en éloignement du carter.

On peut prévoir que chaque pion soit serti par une première extrémité longitudinale dans les premiers alésages de la bride de montage.

De manière avantageuse, une deuxième extrémité longitudinale des pions de retenue radiale est reçue dans des premiers alésages du carter, ces alésages étant avantageusement non traversants. Dans une variante, on peut prévoir que les pions soient sertis dans des premiers alésages du carter.

Dans un exemple avantageux, la bride de montage comporte des deuxièmes alésages traversés par les ensembles vis-écrous, les écrous étant sertis dans les deuxièmes alésages de la bride de montage. On peut alors prévoir avantageusement des moyens de verrouillage en rotation des écrous. Les risques de perdre des écrous sont alors très faibles.

Le verrouillage en rotation est, par exemple obtenu avec chaque écrou comportant au moins un méplat sur sa périphérie et avec la bride comportant une patte bordant chacun des deuxièmes alésages, le méplat coopérant avec la patte pour empêcher la rotation de l'écrou.

Dans une variante de réalisation, les écrous sont formés par la bride de montage, par exemple en rapportant des taraudages dans les deuxièmes alésages de la bride

Avantageusement, on prévoit des viroles de protection recouvrant les têtes des vis de fixation de l'anneau d'abradable.

Le carter peut être un carter sous chambre et les secteurs angulaires forment un distributeur de turbine haute pression, la bride de montage étant disposée du côté d'une chambre de combustion.

La présente invention a également pour objet une turbomachine comportant au moins un aubage fixe selon la présente invention.

### BRÈVE DESCRIPTION DES DESSINS

La présente invention sera mieux comprise à l'aide de la description qui va suivre et dessins sur desquels :
- la figure 1A est une vue en coupe longitudinale d'une partie d'un turboréacteur selon la présente invention au niveau de la chambre de combustion et de la turbine haute pression,
- la figure 1B est une vue de face d'un secteur angulaire d'un distributeur d'un turboréacteur de la figure 1A,
- la figure 2 est une vue agrandie de la figure 1 au niveau de la fixation du distributeur haute pression sur le carter sous chambre,
- la figure 3 est une vue en perspective du carter sous chambre à partir de la chambre de combustion,
- les figures 4A et 4B sont des vues de détail de la figure 2 selon deux variantes de réalisation de la liaison entre les pions de retenue radiale des secteurs angulaires et la bride de montage,
- les figures 4C et 4D sont des vues de détail de la figure 2 selon deux variantes de réalisation de la liaison entre les pions de retenue radiale et le carter sous chambre,
- les figures 5A à 5C sont des vues identiques à la figure 2 dans différentes positions de montage.

### EXPOSÉ DÉTAILLÉ DE MODES DE RÉALISATION PARTICULIERS

Dans la description qui va suivre, sera décrit en détail un distributeur d'une turbine haute pression, cependant l'invention ne se limite pas à un distributeur haute pression, mais s'applique à tout aubage fixe de turbomachine, par exemple à un redresseur de compresseur.

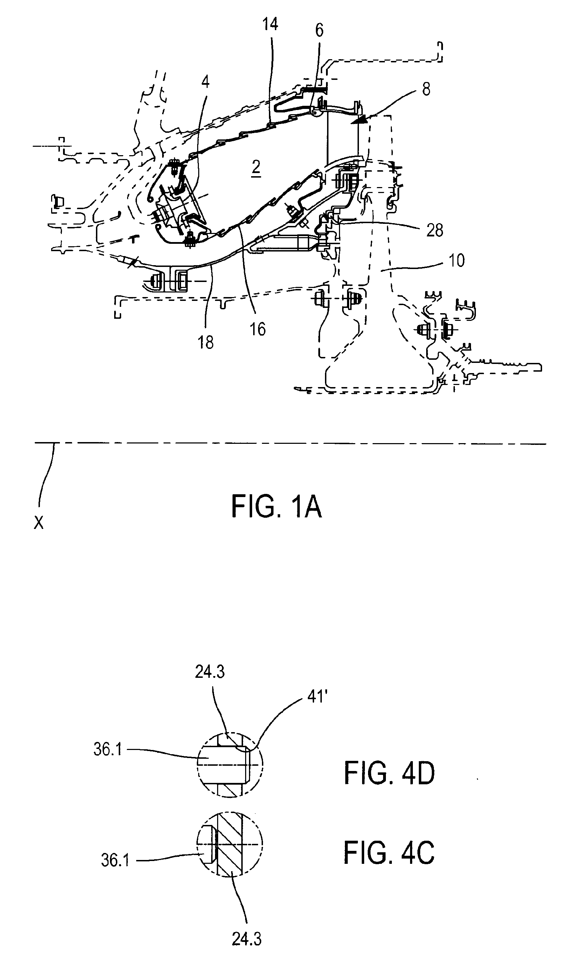

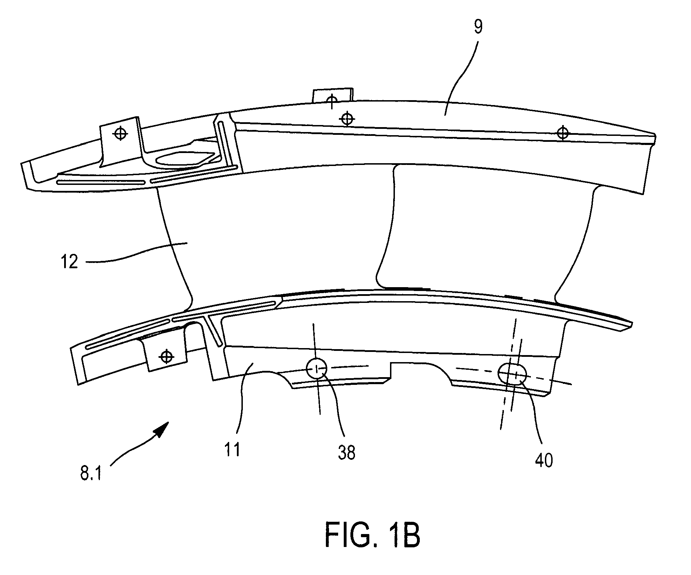

Nous considérerons pour la description le sens de la gauche vers la droite sur la figure 1 qui correspond au sens d'écoulement du flux de gaz, la gauche étant désignée par amont et la droite étant désignée par aval.

A des fins de simplicité, nous utiliserons les mêmes références pour désigner les éléments ayant la même fonction et sensiblement la même structure dans les différents exemples de réalisation qui seront décrits. En outre, nous désignerons l'anneau en matériau abradable par « anneau d'abradable ».

Sur la figure 1A, on peut voir une vue de détail d'un turboréacteur selon la présente invention d'axe de révolution X. Ce turboréacteur comporte notamment une chambre de combustion 2, munie en amont d'un orifice d'admission 4 d'air provenant du compresseur (non représenté), et d'un orifice d'échappement 6 des gaz de combustion. Le turboréacteur comporte également un distributeur haute pression 8 disposé en aval de l'orifice d'échappement 6, une turbine haute pression 10 en aval du distributeur 8, la turbine 10 entraînant le compresseur.

La chambre de combustion 2 est composée d'une enveloppe radialement extérieure 14 fixée sur un carter extérieur et d'une enveloppe radialement intérieure 16 fixée sur un carter intérieur 18, désigné « carter sous chambre ». Le carter sous chambre présente une forme de révolution autour de l'axe longitudinal X.

Le distributeur 8 est fixé sur le carter sous chambre 18. Comme on peut le voir en détail sur la figure 1B, le distributeur 8 comporte des pales 12 s'étendant entre un anneau radialement extérieur 9 et un anneau radialement intérieur 11. Les pales 12 sont disposées en aval de l'orifice d'échappement 6 sur le chemin d'écoulement des gaz de combustion, ces pales 12 sont destinées à redresser le flux de gaz sortant de la chambre de combustion 2 avant leur mise en contact avec la turbine haute pression 10.

Le distributeur 8 est composé d'au moins deux secteurs angulaires 8.1 fixés séparément sur le carter sous chambre 18. A titre d'exemple, le distributeur 8 comporte seize secteurs angulaires 8.1 munis chacun de deux pales.

Les pales 12 s'étendent radialement vers l'extérieur à partir d'une plateforme 20, formant une portion de la couronne intérieure 11 du distributeur 8. Une patte de fixation 22 de la plateforme 20 sur le carter sous chambre 18 est en saillie radialement vers l'intérieur de la plateforme 20 sur la face opposée de la plateforme 20 portant les pales 12.

Lorsque tous les secteurs angulaires 8.1 sont fixés sur le carter sous chambre, les plateformes mises bout à bout forme un anneau continu.

Les secteurs angulaires 8.1 sont fixés sur une partie d'extrémité aval 24 du carter sous chambre 18. Dans l'exemple représenté, la partie d'extrémité aval 24 du carter sous chambre 18 est composée, dans le sens de l'amont vers l'aval, d'une portion de révolution tronconique 24.1 dont l'extrémité de plus grand diamètre est orientée vers l'aval, d'une portion tubulaire 24.2 raccordée à la portion tronconique et d'une portion annulaire 24.3 raccordée à la portion tubulaire 24.2. La portion annulaire 24.3 est contenue dans un plan orthogonal à l'axe longitudinal X.

Le carter comporte également entre la portion tubulaire 24.2 et la portion annulaire 24.3, une saillie annulaire 24.4 s'étendant radialement vers l'extérieur, cette saillie 24.4 est prévue à distance de la portion annulaire 24.3, cette distance étant sensiblement égale à l'épaisseur des pattes de fixation 22.

Un anneau d'abradable 26 est fixé sur un support 28 par lequel l'anneau est solidarisé au carter sous chambre 18.

Le support 28 comporte une portion tubulaire 28.1 sur la périphérie intérieure de laquelle est fixé l'anneau d'abradable 26, et une portion tronconique 28.2 en aval de la portion tubulaire 28.2 offrant une conicité telle qu'elle est logée dans la portion tronconique 24.1 de la partie d'extrémité 24 du carter sous chambre 18.

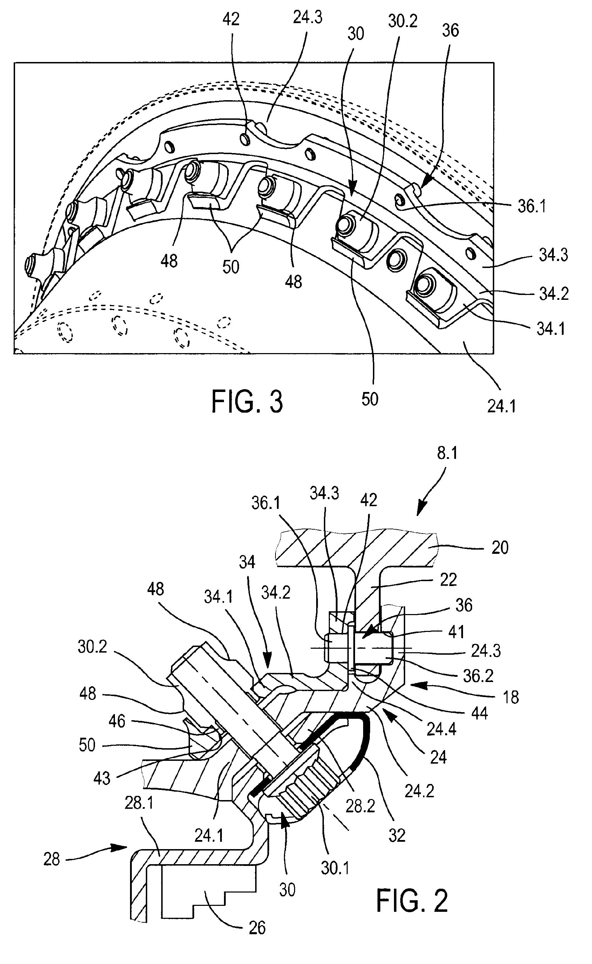

Le support 28 est fixé sur le carter sous chambre 18 au moyen d'ensemble vis-écrou 30 traversant les portions tronconiques 24.2 et 28.2 du carter sous chambre et du support 28 respectivement. Comme on peut le voir sur la figure 3, des ensembles vis-écrou sont répartis régulièrement sur tout le tour du carter.

Dans l'exemple représenté, les têtes des vis 30.1 sont du côté radialement intérieur, i.e. de la portion tronconique 28.2 du support 28 et les écrous sont du côté radialement extérieur.

Avantageusement, on prévoit de recouvrir les têtes des vis 30.1 par une virole de protection 32 pour réduire les perturbations aérodynamiques dues aux têtes de vis, et pour protéger les têtes de vis de la haute température.

Selon la présente invention, les secteurs annulaires 8.1 du distributeur sont fixés sur le carter sous chambre au moyen des ensembles vis-écrou 30 servant à fixer l'anneau d'abradable 26 sur le carter sous chambre 18.

Plus particulièrement, les secteurs angulaires 8.1 sont immobilisés sur le carter sous chambre 18 entre une pièce 34 et le carter sous chambre 18.

La pièce 34 forme une bride de montage dont la forme est similaire à la partie d'extrémité 24 du carter sous chambre 18, et dont les dimensions sont telles que la bride est apte à entourer la partie d'extrémité 24.

Par conséquent, la bride de montage 34 comporte, de l'amont vers l'aval, une portion tronconique 34.1, une portion tubulaire 34.2 et une portion annulaire 34.3 disposés dans un plan orthogonal à l'axe longitudinal X. La portion tronconique 34.1 recouvre extérieurement la portion tronconique 24.1 et est traversé par les vis 30.1, la portion tubulaire 34.2 recouvre extérieurement la portion tubulaire 24.2 et la portion tubulaire 34.3 est en contact avec une face amont des pattes de fixation 22.

La portion annulaire 34.3 comporte sur sa face aval au niveau de son extrémité radialement extérieure un anneau 34.4 en saillie ver l'aval.

Les pattes de fixation sont disposées entre une face amont de la portion annulaire 24.3 et l'anneau 34.4 de la bride de montage 34. Ces deux faces limitent le déplacement axial des sections angulaires 8.1. Un jeu axial est prévu pour permettre le basculement du distributeur haute pression en fonctionnement ; en fonctionnement, les efforts des gaz plaquent le distributeur haute pression vers l'aval.

En outre, selon l'invention, le maintien radial des secteurs angulaires 8.1 est obtenu au moyen de pions 36 s'étendant parallèlement à l'axe longitudinal entre la portion annulaire 24.1 du carter 18 et la portion annulaire 24.1 de la bride de montage et traversant les pattes de fixation 22.

Pour cela, chaque patte de fixation 22 comporte deux alésages traversants 38, 40, visibles sur la figure 1B, réalisés sur une portion d'arc de cercle centré sur l'axe X. L'un des alésages 38 a une section circulaire de diamètre sensiblement égal à celui des pions de retenue radiale 36 pour permettre leur mise en place dans l'alésage 38, et l'autre 40 a une section oblongue dont la plus grande dimension est orientée le long de l'arc de cercle centré sur l'axe X, le plus petit diamètre étant sensiblement égal au diamètre des pions de retenue radiale 36. La mise en oeuvre d'un alésage circulaire et d'un alésage oblong permet un montage même en cas de variation des dimensions.

Dans l'exemple représenté, les pions 36 sont reçus au niveau de leur extrémité aval dans des alésages non débouchants 41 pratiqués dans la face amont de la portion annulaire 24.1 du carter sous chambre 18. Cette réalisation permet à la fois de ne pas dégrader l'étanchéité entre les deux zones de part et d'autre du carter sous chambre 18, qui sont à des pressions différentes, et d'assurer une bonne rigidité de la liaison entre le secteur angulaire et le carter sous chambre.

Sur les figures 4C et 4D, on peut voir des variantes de la liaison entre le carter sous chambre 18 et les pions 36.

Sur la figure 4C, la portion annulaire 24.3 comporte une face amont plane, l'extrémité libre de la queue 36.1 du pion 36 est en appui contre cette face. Cette réalisation est très simple et ne dégrade pas l'étanchéité.

Sur la figure 4D, la portion annulaire 24.3 comporte une pluralité de paires d'alésages débouchants 41' recevant l'extrémité libre de la queue 36.1 de chaque pion 36, le nombre de paires d'alésages 41' étant égal au nombre de secteurs angulaires de distributeur à fixer. Cette réalisation est de fabrication simple et assure une bonne rigidité de la liaison entre le secteur angulaire et le carter sous chambre.

Dans l'exemple représenté sur la figure 2, la portion annulaire 34.3 comportent des alésages traversants 42 d'axe parallèle à l'axe longitudinal X, et traversés chacun par un pion 36. Il y a autant de paires de pions que de liaison à réaliser entre les secteurs angulaires 8.1 et le carter sous chambre 18.

Dans l'exemple représenté sur la figure 2, chaque pion 36 est serti par une première extrémité longitudinale dans un alésage 42. De manière avantageuse, chaque pion 36 comporte une collerette 44 délimitant une tête 36.1 du côté amont et une queue 36.2 du côté aval, la tête 36.1 étant sertie dans les alésages 42.

La collerette 44 permet d'orienter l'axe du pion 36 orthogonalement à la portion annulaire 34.3. Par ailleurs, elle forme une butée axiale pour le pion et fixe la longueur de la partie du pion 36 ou queue 36.2 faisant saillie vers l'aval.

Dans le cas où la longueur de la tête et l'épaisseur de la bride de montage sont suffisantes pour assurer la perpendicularité du pion par rapport à la bride, et pour former une butée axiale pour les pions, une telle collerette peut être omise.

Au lieu de sertir les têtes 36.1 dans les alésages 42, on peut prévoir de réaliser des têtes 36.1 filetées de longueur suffisante pour qu'elles dépassent des alésages 42 vers l'amont, et de visser des écrous sur chacune des têtes, ces écrous étant ensuite avantageusement sertis dans les alésages 42.

On peut également envisager de sertir les pions dans la portion annulaire 24.3 du carter et non dans la bride 24. Cette variante a pour avantage de simplifier les réparations puisque, lors du retrait de la bride, les secteurs angulaires 8.1 restent sur le carter, supportés par les pions.

On peut également envisager d'utiliser des pions munis chacun d'une collerette et qui soient montés avec jeu à la fois dans le carter et dans la bride.

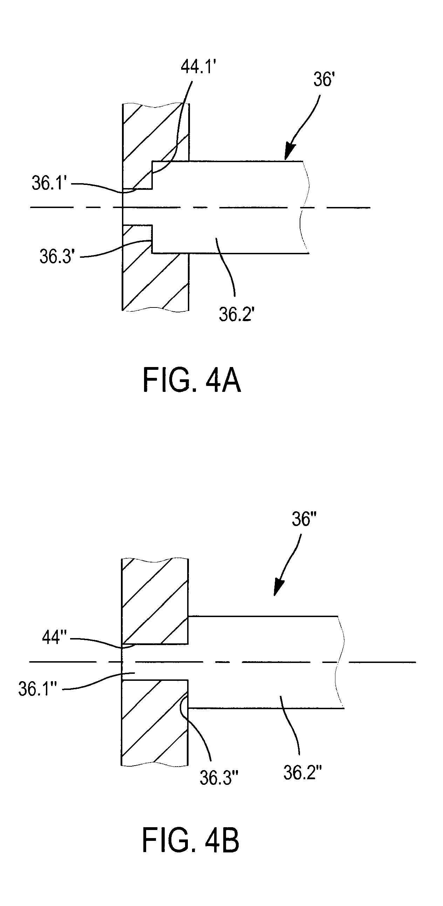

Sur les figures 4A et 4B, on peut voir d'autres exemples de réalisation pour arrêter axialement les pions.

Sur la figure 4A, les alésages 44' comporte deux parties de diamètres différents raccordées par une portée annulaire 44.1' orientée vers l'aval, et l'extrémité amont du pion 36' comporte une partie de plus petit diamètre 36.1' et une partie de plus grand diamètre 36.2' raccordée par un épaulement 36.3', l'épaulement venant s'appliquer contre la portée annulaire, et arrêtant axialement les pions.

Sur la figure 4B, les pions 36" comportent une partie de plus petit diamètre 36.1" et une partie de plus grand diamètre 36.2" raccordée par un épaulement 36.3" et arrêtant axialement les pions, l'épaulement venant s'appliquer contre la face aval de portion annulaire 34.3, le diamètre des alésages 44", étant sensiblement égal à celui de la partie de plus petit diamètre 36.1".

Les écrous 30.2 sont avantageusement sertis sur la bride de montage. Dans l'exemple représenté, la portion tronconique 34.1 de la bride 34 comportent des alésages 43 traversés par les vis. Les alésages 43 offrent un diamètre supérieur à celui des vis 30.1, et les écrous comportent une jupe de sertissage 46 bordant les extrémités des écrous orientées du côté des alésages 43. Les jupes de sertissage 46 pénètrent chacune dans un alésage entre le bord de l'orifice et la vis, ces jupes 46 étant déformées pour réaliser le sertissage.

Il est, en outre, avantageusement prévu un arrêt en rotation des écrous 30.2. Pour cela, les écrous comportent au moins un méplat 48 sur leur périphérie extérieure, avantageusement deux pour simplifier l'orientation des écrous, la portion tronconique 34.1 comportant, quant à elle, des languettes 50 en bordure de chacun des orifices, coopérant avec un méplat pour empêcher la rotation des écrous.

Ainsi, grâce au sertissage et à l'arrêt en rotation, les écrous ne peuvent se dévisser et se séparer des écrous. Les risques de perte accidentelle d'un ensemble vis-écrou sont alors très faibles. Il est bien entendu que l'assemblage au moyen d'écrous standards entre dans le cadre de la présente invention.

Sur la figure 3, on peut voir une vue de la bride du côté amont, avantageusement la portion tronconique 34.1 est festonnée, les festons comportant les alésages 42 et étant traversés par les vis 30.1. Ce festonnage permet de réduire la masse de la bride. De même la portion annulaire 34.1 est également festonnée entre les paires d'alésages recevant les paires de pions traversant un secteur angulaire.

En outre, cette forme ajourée permet d'avoir une plus grande élasticité pour le montage et permet de rattraper certains jeux, comme nous le verrons par la suite.

Nous allons maintenant expliquer le montage des sections angulaires du distributeur sur le carter sous chambre 18.

Les secteurs angulaires sont enfilés sur les pions 36 fixés sur la bride de montage 34.

La bride de montage 34 ainsi équipée est rapprocher axialement du carter sous chambre jusqu'à faire pénétrer les pions 36 dans les alésages non débouchants 41.

Les écrous 30.2 sont mis en place sur la portion tronconique 34.1 au droit des orifices, le méplat 48 étant en contact avec la languette 50.

Le support d'abradable est ensuite mis en place à l'intérieur du carter sous chambre 18, de sorte que la partie tronconique vienne en appui sur la face intérieure de la partie tronconique 24.1 du carter sous chambre 18. Une virole de protection peut être ajoutée.

Les vis 30.1 sont ensuite insérées par l'intérieur du carter sous chambre 18 et traverse le support d'abradable, le carter 18 et la bride de montage.

Les vis 30.1 sont ensuite vissées dans les écrous 30.2.

Par conséquent, on utilise un seul jeu d'ensemble vis-écrou 30 pour assembler simultanément l'anneau d'abradable et les secteurs angulaires. L'aubage est alors simplifié, allégé et le temps de fabrication est réduit.

De manière avantageuse, on peut utiliser les festons de la bride pour renforcer l'appui de la bride sur les pattes de fixation 22.

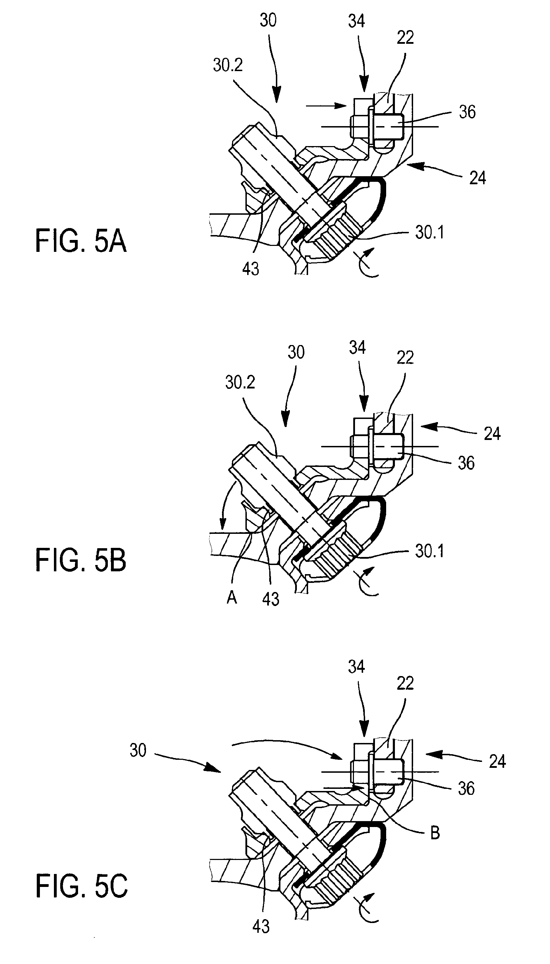

Sur les figures 5A à 5C, on peut voir l'évolution des jeux entre les différentes pièces lors du serrage des vis.

Lors de l'assemblage des pièces, le centrage de la bride de montage sur le carter 18 est obtenu par les pions 30. On met ensuite en butée la portion tubulaire 34.2 de la bride de montage sur la portion tubulaire 24.2 du carter 18, et la virole de protection sur la portion tubulaire 24.2 du carter 18.

On visse ensuite les vis 30.1 dans les écrous 30.2, ce qui provoque le basculement des festons de la bride en direction du carter, jusqu'à ce que les bords des festons viennent en contact avec le carter, position désignée par la lettre A.

On poursuit ensuite le serrage des vis jusqu'à la valeur de couple nécessaire, ce qui provoque par réaction la mise en contact de la face aval de la portion annulaire 34.3 de la bride contre la saillie annulaire du carter, désigné par la lettre B. ce rattrapage de jeu est facilité par la plus grande élasticité de la bride de montage ajourée.

On peut envisager de ne pas utiliser d'écrous et visser directement les vis dans la bride en réalisant des alésages taraudés dans la bride, les taraudages étant directement usinés dans la bride ou rapportés sous forme d'inserts

Il est bien entendu que les formes particulières du carter et de la bride de montage ne sont en aucun cas limitatives, et qu'un profil sans portion tronconique pourrait être envisagé.

## Revendications

1. Aubage fixe de turbomachine d'axe longitudinal (X) comportant un carter (18) et au moins deux secteurs angulaires (8.1) munis de pales (12), lesdits secteurs angulaires (8.1) étant fixés sur le carter (18), chaque secteur angulaire (8.1) comportant une plateforme (20) de laquelle au moins une pale (12) est en saillie radialement vers l'extérieur et une patte de fixation (22) du secteur angulaire (8.1) sur le carter (18), ladite patte de fixation (22) étant en saillie de la plateforme (22) radialement vers l'intérieur, l'aubage fixe comportant un anneau d'abradable (26) porté par un support (28) fixé sur le carter (18) du côté d'un aubage mobile au moyen d'une pluralité d'ensemble vis-écrou (30), l'aubage fixe comportant également des pions de retenue radiale (36, 36', 36") des secteurs angulaires (8.1) introduits dans des premiers alésages pratiqués dans les pattes de fixation (22) et dans une bride de montage (34), lesdits alésages ayant des axes sensiblement parallèles à l'axe longitudinal (X), la bride de montage (34) étant fixée sur le carter (18) par les mêmes ensembles vis-écrous (30) que ceux fixant le support d'anneau d'abradable sur le carter (18), **caractérisé en ce que** la pluralité d' ensemble vis-écrou (30) traverse le support (28) de l'anneau d'abradable (26) et la bride de montage est située à l'opposé de l'anneau d'abradable par rapport au carter (18) et définit avec le carter (18) une gorge dans laquelle sont disposées les pattes de fixation (22).

2. Aubage fixe selon la revendication 1, dans lequel chaque pion (36) comporte une collerette (44) s'étendant orthogonalement à l'axe du pion (36) radialement vers l'extérieur, ladite collerette (44) délimitant axialement une tête (36.1) et une queue (36.2), la tête (36.1) étant reçue dans un premier alésage (42) de la bride de montage (34) et la collerette (44) venant en appui plan par une de ses faces contre la bride de montage (34), de sorte à orienter l'axe du pion (30) orthogonalement à la bride de montage (44).

3. Aubage fixe selon la revendication 1, dans lequel chaque pion (36') comporte une partie de plus petite section (36.1') et une deuxième partie de plus grande section (36.2') raccordées par un épaulement (36.3'), les premiers alésages comportant chacun une portée annulaire (44.1') contre lequel vient en appui ledit épaulement (36.3') de sorte à empêcher les pions de retenue radiale (36) de se déplacer axialement en éloignement du carter (18).

4. Aubage fixe selon la revendication 1, dans lequel chaque pion de retenue radiale (36") comporte une première partie de plus petite section (36.1") et une deuxième partie de plus grande section (36.2") raccordées par un épaulement (36.3"), ledit épaulement (36.3") venant en appui contre la périphérie d'un premier alésage de la bride de montage de sorte à empêcher les pions (36") de se déplacer axialement en éloignement du carter (18).

5. Aubage fixe selon l'une des revendications 1 à 4, dans lequel chaque pion (36) est serti par une première extrémité longitudinale dans les premiers alésages de la bride de montage (34).

6. Aubage fixe selon l'une des revendications 1 à 5, dans lequel une deuxième extrémité longitudinale des pions de retenue radiale (36) est reçue dans des premiers alésages du carter, ces alésages étant avantageusement non traversants.

7. Aubage fixe selon la revendication 6, dans lequel les pions (36) sont sertis dans des premiers alésages du carter (18).

8. Aubage fixe selon l'une des revendications précédentes, dans lequel la bride de montage (34) comporte des deuxièmes alésages (43) traversés par les ensembles vis-écrous (30), les écrous (36.1) étant sertis dans les deuxièmes alésages (43) de la bride de montage (34).

9. Aubage fixe selon la revendication précédente, comportant des moyens de verrouillage en rotation des écrous.

10. Aubage fixe selon la revendication précédente, dans lequel chaque écrou comporte au moins un méplat (48) sur sa périphérie et la bride de montage (34) comporte une patte (50) bordant chacun des deuxièmes alésages (43), le méplat (48) coopérant avec la patte (50) pour empêcher la rotation de l'écrou (30.2).

11. Aubage fixe selon l'une des revendications 1 à 9, dans lequel les écrous sont formés par la bride de montage (34), par exemple en rapportant des taraudages dans les deuxièmes alésages de la bride

12. Aubage fixe selon l'une des revendications précédentes, comportant des viroles de protection (32) recouvrant les têtes des vis (30.1) de fixation de l'anneau d'abradable.

13. Aubage fixe selon l'une des revendications 1 à 12, dans lequel le carter (18) est un carter sous chambre et les secteurs angulaires (8.1) forment un distributeur de turbine haute pression, la bride de montage (34) étant disposée du côté d'une chambre de combustion.

14. Turbomachine comportant au moins un aubage fixe selon l'une des revendications précédentes.

## Patentansprüche

1. Leitbeschaufelung einer Turbomaschine mit einer Längsachse (X), umfassend ein Gehäuse (18) und wenigstens zwei Winkelsektoren (8.1), die mit Schaufeln (12) ausgestattet sind, wobei die Winkelsektoren (8.1) an dem Gehäuse (18) befestigt sind, wobei jeder Winkelsektor (8.1) eine Plattform (20), von der wenigstens eine Schaufel (12) radial nach außen vorspringt, sowie eine Lasche zum Befestigen (22) des Winkelsektors (8.1) an dem Gehäuse (18) umfasst, wobei die Befestigungslasche (22) von der Plattform (20) radial nach innen vorspringt, wobei die Leitbeschaufelung einen Abriebring (26) umfasst, der von einem Halter (28) getragen ist, welcher auf der Seite einer Laufbeschaufelung mittels einer Vielzahl von Schraube-Mutter-Anordnungen (30) an dem Gehäuse (18) befestigt ist, wobei die Leitbeschaufelung auch Stifte zum radialen Halten (36, 36', 36") der Winkelsektoren (8.1) umfasst, die in erste Bohrungen, welche in den Befestigungslaschen (22) und in einem Montageflansch (34) ausgebildet sind, eingeführt sind, wobei die Achsen der Bohrungen zu der Längsachse (X) im Wesentlichen parallel verlaufen, wobei der Montageflansch (34) an dem Gehäuse (18) durch die gleichen Schraube-Mutter-Anordnungen (30) befestigt ist, wie diejenigen, welche den Abriebringhalter an dem Gehäuse (18) befestigen, **dadurch gekennzeichnet, dass** die Vielzahl von Schraube-Mutter-Anordnungen (30) den Halter (28) des Abriebrings (26) durchgreift und der Montageflansch in Bezug auf das Gehäuse (18) dem Abriebring gegenüberliegt und mit dem Gehäuse (18) eine Nut definiert, in der die Befestigungslaschen (22) angeordnet sind.

2. Leitbeschaufelung nach Anspruch 1, wobei jeder Stift (36) einen Kragen (44) aufweist, der orthogonal zur Achse des Stiftes (36) radial nach außen verläuft, wobei der Kragen (44) einen Kopf (36.1) und einen Schaft (36.2) axial begrenzt, wobei der Kopf (36. 1) in einer ersten Bohrung (42) des Montageflansches (34) aufgenommen ist und wobei der Kragen (44) mit einer seiner Flächen an dem Montageflansch (34) in Plananlage gelangt, um die Achse des Stiftes (30) orthogonal zu dem Montageflansch (44) auszurichten.

3. Leitbeschaufelung nach Anspruch 1, wobei jeder Stift (36') einen Teil mit kleinerem Querschnitt (36.1') und einen zweiten Teil mit größerem Querschnitt (36.2'), die durch eine Schulter (36.3') verbunden sind, umfasst, wobei die ersten Bohrungen jeweils eine ringförmige Auflagefläche (44.1') umfassen, an der die Schulter (36.3') in Anlage gelangt, um die Stifte zum radialen Halten (36) daran zu hindern, sich von dem Gehäuse (18) entfernend axial zu bewegen.

4. Leitbeschaufelung nach Anspruch 1, wobei jeder Stift zum radialen Halten (36") einen ersten Teil mit kleinerem Querschnitt (36.1 ") und einen zweiten Teil mit größerem Querschnitt (36.2"), die durch eine Schulter (36.3") verbunden sind, umfasst, wobei die Schulter (36.3") an dem Umfang einer ersten Bohrung des Montageflansches in Anlage gelangt, um die Stifte (36") daran zu hindern, sich von dem Gehäuse (18) entfernend axial zu bewegen.

5. Leitbeschaufelung nach einem der Ansprüche 1 bis 4, wobei jeder Stift (36) mit einem ersten Längsende in die ersten Bohrungen des Montageflansches (34) gequetscht ist.

6. Leitbeschaufelung nach einem der Ansprüche 1 bis 5, wobei ein zweites Längsende der Stifte zum radialen Halten (36) in ersten Bohrungen des Gehäuses aufgenommen ist, wobei diese Bohrungen vorteilhafterweise nicht durchgehend sind.

7. Leitbeschaufelung nach Anspruch 6, wobei die Stifte (36) in erste Bohrungen des Gehäuses (18) gequetscht sind.

8. Leitbeschaufelung nach einem der vorhergehenden Ansprüche, wobei der Montageflansch (34) zweite Bohrungen (43), welche von den Schraube-Mutter-Anordnungen (30) durchgriffen sind, umfasst, wobei die Muttern (36.1) in die zweiten Bohrungen (43) des Montageflansches (34) gequetscht sind.

9. Leitbeschaufelung nach dem vorhergehenden Anspruch, umfassend Mittel zur Drehverriegelung der Muttern.

10. Leitbeschaufelung nach dem vorhergehenden Anspruch, wobei jede Mutter wenigstens eine Abflachung (48) an ihrem Umfang umfasst und der Montageflansch (34) eine Lasche (50), welche jede der zweiten Bohrungen (43) säumt, umfasst, wobei die Abflachung (48) mit der Lasche (50) zusammenwirkt, um das Drehen der Mutter (30.2) zu verhindern.

11. Leitbeschaufelung nach einem der Ansprüche 1 bis 9, wobei die Muttern durch den Montageflansch (34) gebildet sind, beispielsweise dadurch, dass in die zweiten Bohrungen des Flansches Innengewinde eingebracht werden.

12. Leitbeschaufelung nach einem der vorhergehenden Ansprüche, umfassend Schutzringe (32), welche die Köpfe der Schrauben (30.1) zur Befestigung des Abriebrings bedecken.

13. Leitbeschaufelung nach einem der Ansprüche 1 bis 12, wobei das Gehäuse (18) ein Unter-Kammer-Gehäuse ist und die Winkelsektoren (8.1) ein Hochdruckturbinenleitrad bilden, wobei der Montageflansch (34) auf der Seite einer Brennkammer angeordnet ist.

14. Turbomaschine, umfassend wenigstens eine Leitbeschaufelung nach einem der vorhergehenden Ansprüche.

## Claims

1. A stationary vane assembly for a turbine engine with a longitudinal axis (X) comprising a casing (18) and at least two angular sectors (8.1) provided with blades (12), said angular sectors (8.1) being fixed on the casing (18), each angular sector (8.1) comprising a platform (20) from which at least one blade (12) protrudes radially outwards and a fastening tab (22) for fastening the angular sector (8.1) on the casing (18), said fastening tab (22) protruding from the platform (22) radially inwards, the fixed vane assembly comprising a ring of abradable material (26) supported by a support (28) fixed on the casing (18) on a rotor vane assembly side via a plurality of screw-nut assemblies (30), the stationary vane assembly also comprising pins (36, 36', 36") for radial retention of the angular sectors (8.1) introduced into first bores formed in the fastening tabs (22) and in a mounting flange (34) said bores having axes substantially parallel to the longitudinal axis (X), the mounting flange (34) being fixed on the casing (18) using the same screw-nut assemblies (30) as those fixing the abradable material ring support on the casing (18) **characterized in that**
the plurality of screw-nut assemblies (30) pass through the support (28) of the ring of abradable material (26) and the mounting flange (34) is situated opposite the ring of abradable material relative to the casing (18) and defines, with the casing (18), a groove in which the fastening tabs (22) are arranged.

2. The stationary vane assembly according to claim 1, wherein each pin (36) comprises a skirt (44) extending orthogonally to the axis of the pin (36) radially outwards, said skirt (44) axially delimiting a head (36.1) and a tail (36.2), the head (36.1) being received in a first bore (42) of the mounting flange (34) and the skirt (44) bearing flat by one of its faces against the mounting flange (34), so as to orient the axis of the pin (30) orthogonally to the mounting flange (44).

3. The stationary vane assembly according to claim 1, wherein each pin (36') comprises a portion with a smaller section (36.1') and a second portion with a larger section (36.2') connected by a shoulder (36.3'), the first bores each comprising an annular step (44.1') against which said shoulder (36.3') bears so as to prevent the radial retaining pins (36) from moving axially away from the casing (18).

4. The stationary vane assembly according to claim 1, wherein each radial retaining pin (36") comprises a first portion with a smaller section (36.1") and a second portion with a larger section (36.2") connected by a shoulder (36.3"), said shoulder (36.3") bearing against the periphery of a first bore of the mounting flange so as to prevent the pins (36") from moving axially away from the casing (18).

5. The stationary vane assembly according to one of claims 1 to 4, wherein each pin (36) is crimped by a first longitudinal end in the first bores of the mounting flange (34).

6. The stationary vane assembly according to one of claims 1 to 5, wherein a second longitudinal end of the radial retaining pins (36) is received in first bores of the casing, these bores advantageously not being through-bores.

7. The stationary vane assembly according to claim 6, wherein the pins (36) are crimped in first bores of the casing (18).

8. The stationary vane assembly according to one of the preceding claims, wherein the mounting flange (34) comprises second bores (43) passed through by the screw-nut assemblies (30), the nuts (36.1) being crimped in the second bores (43) of the mounting flange (34).

9. The stationary vane assembly according to the preceding claim, comprising means for locking the nuts in rotation.

10. The stationary vane according to the preceding claim, wherein each nut comprises at least one flat section (48) on its periphery and the mounting flange (34) comprises a tab (50) bordering each of the second bores (43), the flat section (48) cooperating with the tab (50) to prevent the rotation of the nut (30.2).

11. The stationary vane assembly according to one of claims 1 to 9, wherein the nuts are formed by the mounting flange (34), for example by making tappings in the second bores of the flange.

12. The stationary vane assembly according to one of the preceding claims, comprising protective shrouds (32) covering the heads of the fastening screws (30.1) of the ring of abradable material.

13. The stationary vane assembly according to one of claims 1 to 12, wherein the casing (18) is a inner casing and the angular sectors (8.1) form a highpressure turbine guide vane assembly, the mounting flange (34) being positioned on a combustion chamber side.

14. A turbine engine comprising at least one stationary vane assembly according to one of the preceding claims.
